# EUROPÄISCHE PATENTSCHRIFT

(11) **EP 3 895 293 B1**
(45) Veröffentlichungstag und Bekanntmachung des Hinweises auf die Patenterteilung: **01.06.2022**
(21) Anmeldenummer: 21708951.5
(22) Anmeldetag: 25.02.2021
(51) Int. Cl.: H02K 15/06

(54) **VORRICHTUNG UND VERFAHREN ZUR ÜBERFÜHRUNG VON LEITERSTÜCKEN IN EINE SOLL-ANORDNUNG**
DEVICE AND METHOD FOR TRANSFERRING CONDUCTOR PARTS INTO A DESIRED ARRANGEMENT
DISPOSITIF ET PROCÉDÉ DE TRANSFERT DE PIÈCES CONDUCTRICES DANS UN AGENCEMENT SOUHAITÉ

(30) Priorität: 25.02.2020 DE 102020104915
(43) Veröffentlichungstag der Anmeldung: 20.10.2021
(73) Patentinhaber: Gehring Technologies GmbH + Co. KG, 73760 Ostfildern (DE)
(72) Erfinder: Hausmann, Ludwig, 76137 Karlsruhe (DE); Fleischer, Jürgen, 76228 Karlsruhe (DE); Wiens, Andreas, 74343 Sachsenheim (DE)
(74) Vertreter: DREISS Patentanwälte PartG mbB
(86) Internationale Anmeldenummer: PCT/EP2021/054644
(87) Internationale Veröffentlichungsnummer: WO 2021/170699

(56) Entgegenhaltungen:
- WO-A2-2011/063109
- GB-A- 1 514 608
- JP-A- H10 174 381
- JP-A- 2003 324 911
- JP-B2- 3 973 592
- JP-B2- 3 975 891
- KR-A- 20190 017 547
- US-A1- 2009 260 219
- US-A1- 2018 233 999

## Beschreibung

Die Erfindung betrifft eine Vorrichtung und ein Verfahren zum Überführen von Leiterstücken, insbesondere im Wesentlichen u-förmig-gebogenen Steckspulen-Leiterstücke, die auch als Hairpins bezeichnet werden, in eine Soll-Anordnung.

Bei der Fertigung von elektromechanischen Wandlern, insbesondere Elektromotoren, insbesondere für Traktionsantriebe, werden einzelne Wicklungselemente (Steckspulen, sog. "Hairpins") hergestellt, die im weiteren Prozess zu einer Statorwicklung weiterverarbeitet werden.

Dabei werden die Steckspulen in der Regel aus Flachdraht gefertigt, um gegenüber Spulen aus Runddraht einen höheren Füllgrad in der Statornut der elektrischen Maschine zu erreichen und damit deren Effizienz zu erhöhen. Im Rahmen der Erfindung ist die Verwendung von Steckspulen mit beliebigen, insbesondere konvexen, Leiterquerschnitten möglich, also bspw. runde oder rechteckige Querschnitte. Im Rahmen der Herstellung der Wicklungselemente werden aus Endlosmaterial entsprechende Leiterstücke abgetrennt und zu geeigneten Wicklungselementen umgeformt. Typischerweise wird ein überwiegender Teil, der in einem Stator angeordneten Leiterstücke mit gleicher oder ähnlicher geometrischer Form hergestellt und das Statorpaket eingesetzt. Nach dem Einsetzen werden die freien Enden der Wicklungselemente in der Regel erneut umgeformt und entsprechend dem elektrischen Verschaltschema kontaktiert, bspw. durch paarweises Verschweißen der freien Enden.

JP 2003 324 911 A, WO 2011/063 109 A2, GB 1 514 608 A und KR 2019 0017547 A zeigen jeweils Vorrichtungen zum Anordnen von Leiterstücken oder Wicklungen mit Merkmalen des Anspruchs 1.

Aufgabe der vorliegenden Erfindung ist es, eine Möglichkeit bereitzustellen, die Leiterstücke möglichst zeit- und kosteneffizient in eine Anordnung, die im Folgenden als Soll-Anordnung bezeichnet wird, zu überführen, die sich besonders zum Greifen und Einsetzen der Leiterstücke in ein Statorpaket eignet.

Gelöst wird diese Aufgabe erfindungsgemäß durch eine Vorrichtung gemäß Anspruch 1 und unabhängig davon durch ein Verfahren gemäß Anspruch 8.

Mit der Soll-Anordnung kann im vorliegenden Kontext eine Anordnung der Leiterstücke gemeint sein, bei der diese in einer Umfangsrichtung verteilt auf mehreren konzentrisch zueinander angeordneten Kreisbahnen oder auf Abschnitten von konzentrischen Kreisbahnen angeordnet sind, so dass die Leiterstücke in radial ausgerichteten Reihen angeordnet sind, die in Umfangsrichtung über in radialer Richtung verlaufende Radialspalte zueinander beabstandet sind.

Bei der Verwendung von Hairpin Leiterstücken kann die Soll-Anordnung insbesondere umfassen, dass jeweilige freie Schenkel der Hairpins in unterschiedlichen radial ausgerichteten Reihen angeordnet sind. Die jeweiligen freien Schenkel können auf der jeweils gleichen oder auf unterschiedlichen Kreisbahnen angeordnet sein.

Es kann vorgesehen sein, dass im Rahmen des erfindungsgemäßen Verfahrens unterschiedliche Arten von Hairpins verwendet werden. Es kann insbesondere vorgesehen sein, dass Hairpins mit unterschiedlichen Schenkelweiten, also dem Abstand zwischen den beiden freien Schenkeln, verwendet werden. Typischerweise werden Hairpins unterschiedlicher Arten mit wenigstens eines ihrer jeweiligen Schenkel in unterschiedlichen radialen Reihen angeordnet und/oder Kreisbahnen angeordnet. Des Weiteren können ebenfalls Leiterstücke, deren beiden freien Enden nach dem Einbringen in ein Statorpaket nicht auf derselben Seite liegen (s.g. I-Pins), im Rahmen des erfindungsgemäßen Verfahrens in eine Soll Anordnung gebracht werden. Entsprechend kann die Vorrichtung ausgebildet sein, um unterschiedliche Arten von Hairpins und I-Pins (I-Pins dienen z.B. als stabförmige Verschaltelemente, welche nicht zweischenklig ausgeführt sind) in die Soll-Anordnung zu überführen.

Die erfindungsgemäße Vorrichtung dient also zum Anordnen von Leiterstücken, insbesondere Hairpins.

Die Vorrichtung umfasst eine Zuführeinheit, einen Übernahmebereich und eine Anordnungseinheit.

Die Zuführeinheit ist ausgebildet, um Leiterstücke bereitzustellen. Die Zuführeinheit kann eine Fördereinheit umfassen. Die Fördereinheit kann ein umlaufendes Band umfassen. Das Band wiederum kann mit hervorstehenden Vorsprüngen ausgebildet sein, wobei die Vorsprünge als Anlageabschnitte für Leiterstücke ausgebildet sind. Die Zuführeinheit kann also ausgebildet sein, um Leiterstücke aus einem Leiterstückvorrat oder einem Leiterstückeinsetzabschnitt der Anordnungseinheit zuzuführen. Mit einem Leiterstückeinsetzabschnitt kann dabei ein Abschnitt gemeint sein, in dem die einzelnen Leiterstücke bzw. Hairpins in die Vorrichtung eingesetzt werden. Von diesem können die Hairpins mittels der Fördereinheit in der Zuführeinheit bewegt werden und in den Übernahmebereich überführt werden.

Der Übernahmebereich ist für eine Übernahme der Leiterstücke aus der Zuführeinheit in die Anordnungseinheit ausgebildet. Im Übernahmebereich erfolgt also sozusagen die Übergabe in die Anordnungseinheit. Der Übernahmebereich kann als die Schnittstelle zwischen Zuführeinheit bzw. Fördereinheit und Anordnungseinheit gesehen werden.

Die Anordnungseinheit dient dem Überführen in die Soll-Anordnung. Sind die Leiterstücke bzw. Hairpins in der Soll-Anordnung, so können diese in axialer Richtung bewegt, aus der Anordnungseinheit entnommen und direkt in dieser Konfiguration in einen Statorkern bzw. ein Statorpaket eingesetzt werden.

Die Anordnungseinheit umfasst dabei eine Aufnahmeeinheit. Die Anordnungseinheit ist ausgebildet, um die Leiterstücke durch eine Rotationsbewegung der Aufnahmeeinheit gegenüber der Zuführeinheit im Übernahmebereich von der Zuführeinheit zu übernehmen und dabei in die Soll-Anordnung zu überführen. Die Anordnungseinheit ist so ausgebildet, dass die Leiterstücke durch eine Rotationsbewegung der Aufnahmeeinheit gegenüber der Zuführeinheit im Übernahmebereich übernommen und dabei in die Soll-Anordnung überführt werden.

Wie oben bereits erläutert, liegen die Leiterstücke in der Soll-Anordnung in einer Umfangsrichtung verteilt auf einer Kreisbahn (oder mehreren Kreisbahnen) oder auf Abschnitten einer Kreisbahn (oder mehrerer Kreisbahnen) angeordnet. (Insbesondere kann die Soll-Anordnung umfassen, dass die Hairpins in der Umfangsrichtung verteilt auf mehreren konzentrisch zueinander angeordneten Kreisbahnen oder auf Abschnitten von konzentrischen Kreisbahnen angeordnet sind, so dass die Leiterstücke in radial ausgerichteten Reihen angeordnet sind, die in Umfangsrichtung über in radialer Richtung verlaufende Radialspalte zueinander beabstandet sind). Durch die relative Rotationsbewegung zwischen Aufnahmeeinheit und Zuführeinheit wird ein rasches und zuverlässiges Anordnen der Leiterstücke gewährleistet.

Es kann vorgesehen sein, dass die Aufnahmeeinheit als rotierende Einheit in der Vorrichtung bzw. in der Anordnungseinheit vorgesehen ist. Die Zuführeinheit kann demgegenüber ortsfest und mit in der Zuführeinheit beweglichen Komponenten, wie dem umlaufenden Band ausgebildet sein. Die Aufnahmeeinheit kann also drehbar in der Anordnungseinheit angeordnet sein. Dies ermöglicht ein einfaches Aufnehmen der Leiterstücke und den entsprechenden Abtransport der Leiterstücke vom Aufnahmeort bzw. dem Übernahmebereich. Die Aufnahmeeinheit ist also als rotierbare Einheit ausgebildet. Die Aufnahmeeinheit weißt Anlageabschnitte bzw. Anschläge, bspw. Vorsprünge, zur Positionierung der Leiterstücke auf. Die Aufnahmeeinheit gibt durch ihre Struktur also die Soll-Anordnung der Leiterstücke vor.

Die Aufnahmeeinheit kann eine kreisförmige Außenkontur mit um den Umfang der Außenkontur verteilt angeordneten hervorstehenden Vorsprüngen aufweisen. Die Vorsprünge können jeweils als Anlageabschnitte für die Leiterstücke vorgesehen sein. Die Vorsprünge können dabei zur Festlegung der gewünschten Soll-Anordnung dienen. Weiter können die Vorsprünge einen Transport der Leiterstücke begünstigen. Es kann vorgesehen sein, dass die von der Anordnungseinheit umfasste Aufnahmeeinheit austauschbar ist. Die Aufnahmeeinheit kann als Zahnkranz ausgebildet sein. Die Vorsprünge der Aufnahmeeinheit können ggf. mehrere Ringe von Leiterstücken aufnehmen. Ein Ring entspricht der Anordnung einer radial einfachen Lage von Hairpins.

Die Zuführeinheit kann, wie oben erwähnt, eine Fördereinheit umfassen, die ausgebildet ist, um Leiterstücke in den Übernahmebereich zu bewegen. Die Fördereinheit kann wiederum zwei Fördereinheiten umfassen, die derart ausgebildet und in der Zuführeinheit angeordnet sind, dass sie jeweils ausgebildet sind, um einen Schenkel eines hairpinförmigen Leiterstücks in den Übernahmebereich zu fördern.

Jede der Fördereinheiten kann mit einem umlaufenden Band ausgebildet sein, die jeweils mit hervorstehenden Vorsprüngen ausgebildet sind, wobei die Vorsprünge als Anlageabschnitte für Leiterstücke ausgebildet sind.

Die Fördereinheit kann auch eine entsprechend ausgeformte Gewindespindel umfassen, wobei sich die Verwendung eines Bandes oder mehrerer Bänder jedoch als flexibler und schonender erwiesen hat. Andere Arten von Fördereinheiten sind denkbar.

Die Fördereinheit bzw. Fördereinheiten stehen insbesondere mit mindestens (bzw. sind hierfür ausgebildet) einem freien Schenkel der zu bewegenden Hairpins in Kontakt und bewegen diese in den Übernahmebereich.

Bei der Vorrichtung kann vorgesehen sein, dass der Übernahmebereich einen ersten Übergabeabschnitt und einen zweiten Übergabeabschnitt aufweist. Der erste Übergabeabschnitt ist für den Übergang eines ersten Schenkels eines hairpinförmigen Leiterstücks in die Anordnungseinheit ausgebildet. Der zweite Übergabeabschnitt ist für den Übergang eines zweiten Schenkels desselben hairpinförmigen Leiterstücks in die Anordnungseinheit ausgebildet. Die Übergabeabschnitte sind dabei räumlich voneinander getrennt bzw. sind derart ausgebildet, dass sie die jeweiligen Schenkel an unterschiedlichen Stellen des Übernahmebereichs in die Anordnungseinheit überführen.

Die Aufnahmeeinheit kann mechanisch mit der oder den Fördereinheit(en) synchronisiert sein, sodass die Zulieferrate durch die Fördereinheiten mit der Übernahme- bzw. Abtransportrate durch die Aufnahmeeinheit synchronisiert ist. Dies kann beispielsweise über eine Zahnriemen- oder Zahnradverbindung realisiert sein. Grundsätzlich sind unterschiedlichste Antriebe wie z.B. elektrisch, pneumatisch oder hydraulisch für Fördereinheit und die Aufnahmeeinheit vorstellbar, welche nicht mechanisch voneinander abhängig sind, jedoch durch eine geeignete Steuerung miteinander synchronisiert werden.

Es kann insbesondere vorgesehen sein, dass die Fördereinheit die Leiterstücke in den Übernahmebereich fördert, wobei im Übernahmebereich ein der Außenkontur der Aufnahmeeinheit angepasstes und komplementär zu diesem ausgebildetes Führungselement vorgesehen, bspw. angebracht, ist. Sind mehrere Fördereinheiten vorgesehen, so können auch entsprechend mehrere Führungselemente vorgesehen sein. Die Führungselemente können insbesondere einen Zuführweg, der beispielsweise kanalartig ausgebildet ist, für die einzelnen Leiterstücke bilden. Die Leiterstücke bewegen sich entlang dieses Zuführwegs und gelangen in die Aufnahmeeinheit bspw. in die Zwischenräume des die Aufnahmeeinheit bildenden Zahnkranzes.

Die Vorrichtung kann weiter eine Einsetzeinheit (bspw. einen Roboterarm mit Greifer) aufweisen, die angeordnet und ausgebildet ist, um zusätzlich einzelne Leiterstücke bzw. Hairpins in die Aufnahmeeinheit einzusetzen. Auf diese Art können bspw. Spezial-Leiterstücke, Spezialpins an bestimmten Positionen eingesetzt werden. Um zum zusätzlichen Einsetzen von Leiterstücken den notwendigen Platz zu haben, können bereits beim Beschicken der Fördereinheit Lücken gelassen werden.

Die Vorrichtung kann einen Antrieb, bspw. Motor zur Bewirkung der Rotationsbewegung zwischen Aufnahmeeinheit und Übernahmebereich aufweisen. Insbesondere kann der Antrieb die Aufnahmeeinheit direkt antreiben bzw. rotieren.

Es kann auch alternativ oder zusätzlich zu dem Antrieb eine Handantriebseinheit vorgesehen sein, die zur manuellen Betätigung der Aufnahmeeinheit ausgebildet ist.

Es kann eine Entkopplungseinheit vorgesehen sein, die ausgebildet und angeordnet ist, um die jeweiligen freien Schenkel aus dem Eingriff mit der Fördereinheit heraus zu drängen.

Erfindungsgemäß ist weiter ein Verfahren zur Anordnung von Leiterstücken, insbesondere Hairpins, in der Soll-Anordnung in einer Anordnungseinheit.

Die Leiterstücke sind wie erwähnt in der Soll-Anordnung in einer Umfangsrichtung verteilt auf einer Kreisbahn oder auf Abschnitten einer Kreisbahn angeordnet.

Das Verfahren umfasst das Bewegen der Leiterstücke der Reihe nach in einen Übernahmebereich mittels einer Zuführeinheit. Das Verfahren umfasst weiter das Übernehmen der Leiterstücke aus der Zuführeinheit in eine Aufnahmeeinheit einer Anordnungseinheit durch eine Rotationsbewegung zwischen der Aufnahmeeinheit und der Zuführeinheit. Die Leiterstücke werden dabei durch die Rotationsbewegung ebenso in die Soll-Anordnung überführt.

Es ist insbesondere vorgesehen, dass wenigstens ein Teil der Leiterstücke dabei Hairpins sind. Bei der Übernahme der Hairpins wird zunächst ein erster Schenkel in die Anordnungseinheit in seiner in der Soll-Anordnung vorgesehenen Position übernommen. Zeitlich nachfolgend wird ein zweiter Schenkel desselben Hairpins in seine vorgesehene Position in der Soll-Anordnung übernommen.

Die Erfindung wird im Folgenden anhand der Figuren näher beschrieben, wobei gleiche oder funktional gleiche Elemente ggf. lediglich einmal mit Bezugszeichen versehen sind.

Es zeigen:
- Figur 1: zeigt eine Vorrichtung, die kein Teil der Erfindung ist;
- Figur 2: einen vergrößert dargestellten Teilausschnitt aus Figur 1;
- Figur 3: eine alternative Ausführung eines Übernahmebereichs und einer Anordnungseinheit, die nicht unter die Ansprüche fällt;
- Figur 4: eine vereinfacht dargestellte Vorrichtung im Betrieb in einer Draufsicht, die nicht unter die Ansprüche fällt;
- Figur 5: die Vorrichtung aus Figur 4 im Betrieb;
- Figur 6: eine erfindungsgemäße alternative Ausführung der Vorrichtung aus den Figuren 4 und 5;
- Figur 7: eine schematische Darstellung eines Übernahmebereichs;
- Figur 8: eine schematische Darstellung eines Leiterstückeinsetzabschnitts;
- Figur 9: Leiterstücke in ihrer Soll-Anordnung in einer Anordnungseinheit;
- Figur 10: eine schematische Darstellung des Anordnens von Leiterstücken mittels einer erfindungsgemäßen Vorrichtung bzw. des erfindungsgemäßen Verfahrens;
- Figur 11: Darstellung nach Figur 10 in weiter fortgeschrittenem Zustand;
- Figur 12: Darstellung nach Figur 11 in weiter fortgeschrittenem Zustand;
- Figur 13: Darstellung nach Figur 12 in weiter fortgeschrittenem Zustand;
- Figur 14: zwei Hairpins.

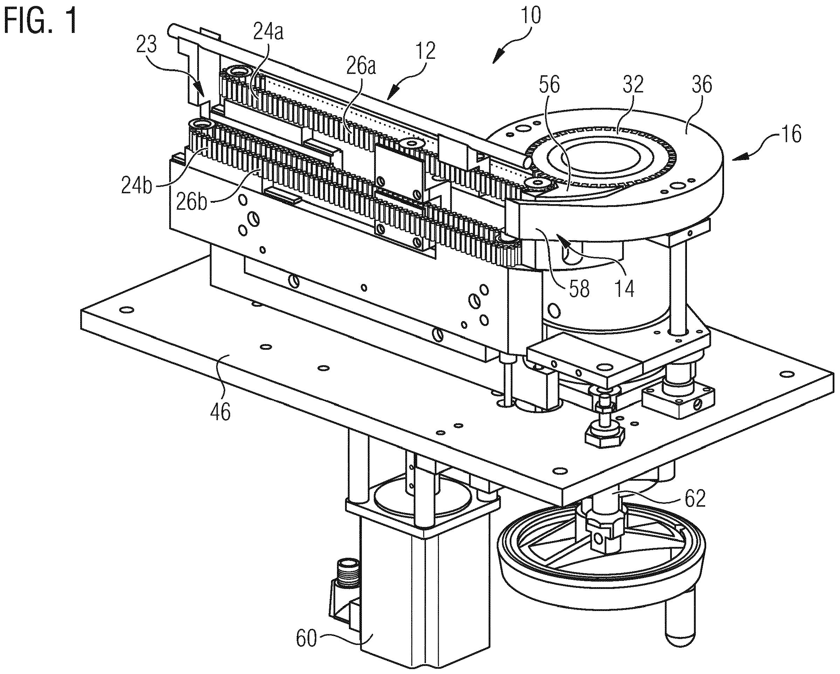

In Figur 1 ist eine Vorrichtung 10 in einer perspektivischen Darstellung gezeigt. Die Vorrichtung 10 dient zum Anordnen von Leiterstücken, insbesondere Hairpins in einer Soll-Anordnung.

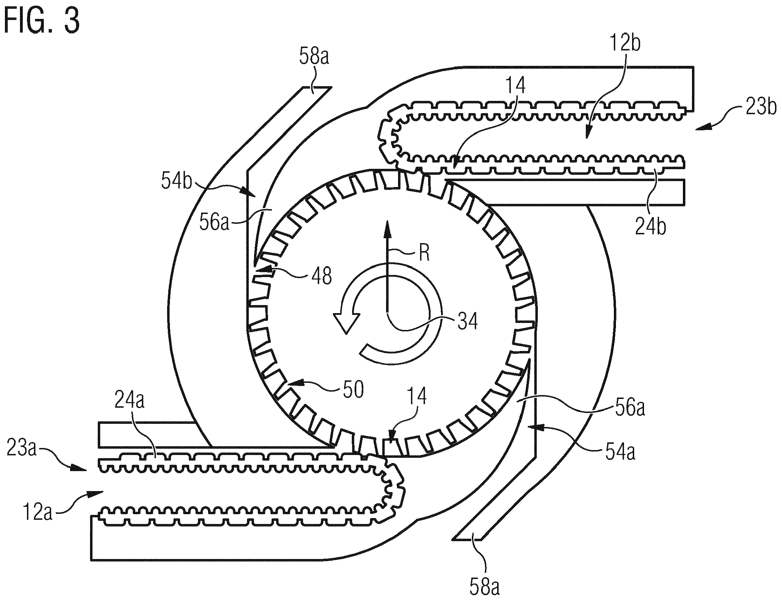

Die Vorrichtung 10 umfasst eine Zuführeinheit 12, einen Übernahmebereich 14 und eine Anordnungseinheit 16. In Figur 3 ist eine Variante mit einer ersten Zuführeinheit 12a und einer zweiten Zuführeinheit 12b gezeigt.

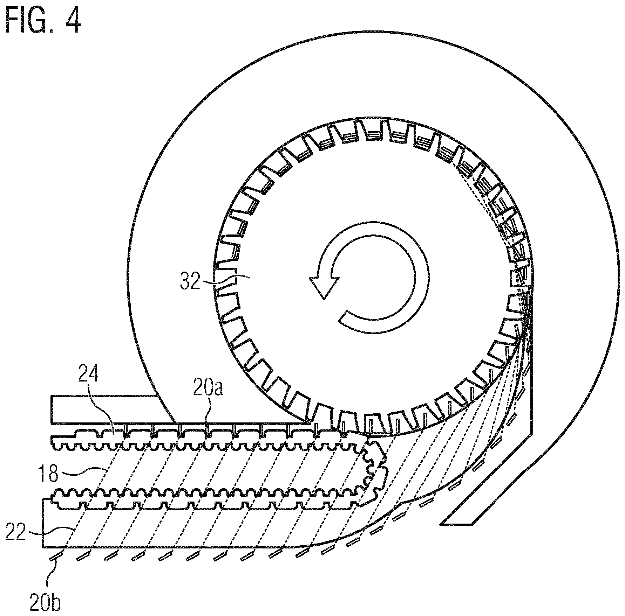

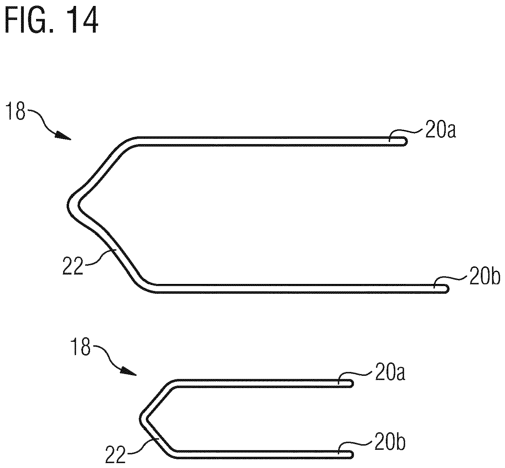

Die Zuführeinheit 12 ist ausgebildet, um Leiterstücke 18 (siehe bspw. Figur 4) bereitzustellen. Die Leiterstücke 18 sind typischerweise als Hairpin-Leiterstücke bzw. Hairpins ausgebildet. Hairpin-Leiterstücke weisen einen ersten (geradlinig erstreckt) freien Schenkel 20a, einen zweiten freien Schenkel 20b und einen Verbindungsabschnitt 22, der die beiden freien Schenkel 20a und 20b miteinander verbindet, auf (siehe Fig. 14). Die Verwendung anderer Leiterstücke bspw. I-Pins ist möglich. Neben Hairpins (mit zwei Schenkeln) können als auch I-Pins in die Fördereinheit eingesetzt und an die Aufnahmeeinheit übergeben werden.

Die Zuführeinheit 12 kann eine Fördereinrichtung 23 umfassen. Die Fördereinrichtung 23 ist ausgebildet, um Leiterstücke 18 in den Übernahmebereich zu bewegen.

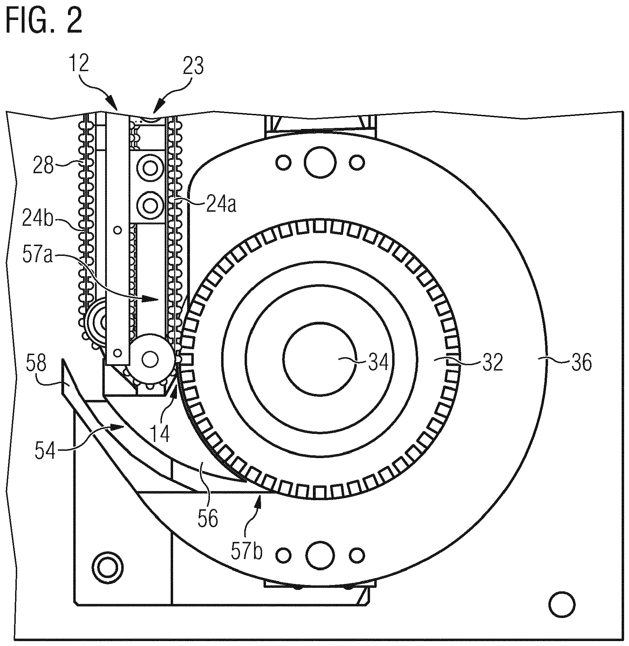

Im Beispiel von Figur 1 bzw. Figur 2 umfasst die Fördereinrichtung 23 eine erste Fördereinheit 24a und eine zweite Fördereinheit 24b. Die Fördereinheiten 24a und 24b umfassen jeweils ein umlaufendes Band 26a und 26b. Die Fördereinheiten 24a und 24b stehen beim Fördervorgang jeweils mit einem Schenkel 20 eines Hairpins in Wirkkontakt.

In Figur 3 ist die Möglichkeit illustriert, dass mehrere, vorliegend zwei, Fördereinrichtungen 23, eine erste Fördereinrichtung 23a und eine zweite Fördereinrichtung 23b, vorgesehen sind (entsprechend zwei Zuführeinheiten 12). In diesem Beispiel umfasst jede der Fördereinrichtungen 23a und 23b je eine Fördereinheiten 24a bzw. 24b, die je ein umlaufendes Band umfassen. Mehrere Fördereinheiten 24 können je Fördereinrichtungen 23 vorgesehen sein (Ähnlich der Ausführungsform von Figur 1 und 2).

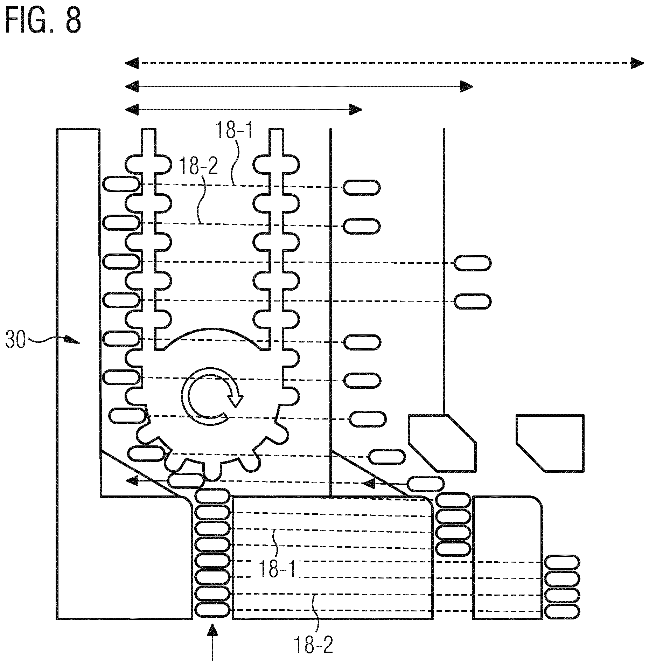

Das jeweilige Band 26 bzw. 26a, 26b wiederum kann mit hervorstehenden Vorsprüngen 28 ausgebildet sein. Die Vorsprünge 28 sind als Anlageabschnitte für Leiterstücke 18 ausgebildet. Die Zuführeinheit 12 kann also ausgebildet sein, um Leiterstücke 18 aus einem Leiterstückvorrat oder einem Leiterstückeinsetzabschnitt 30 (siehe Figur 8) zu fördern.

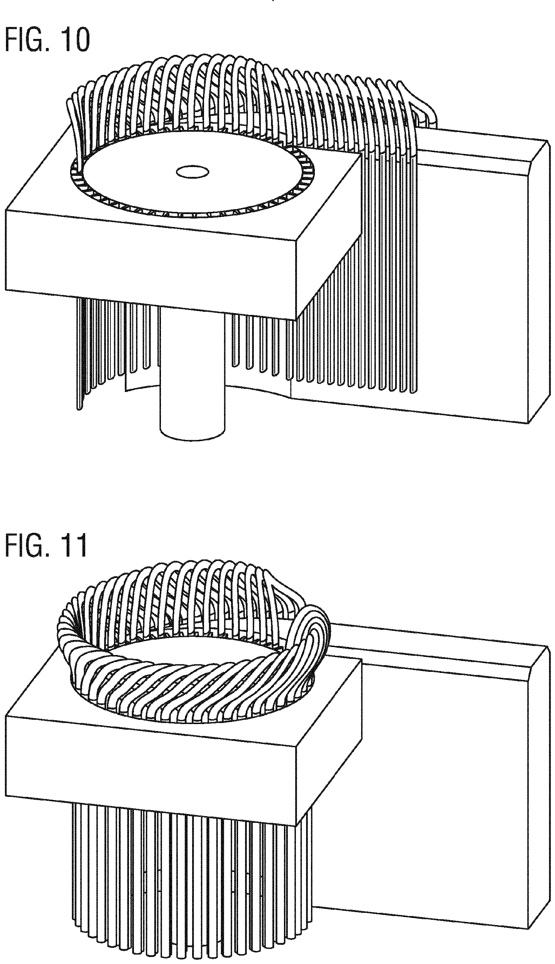

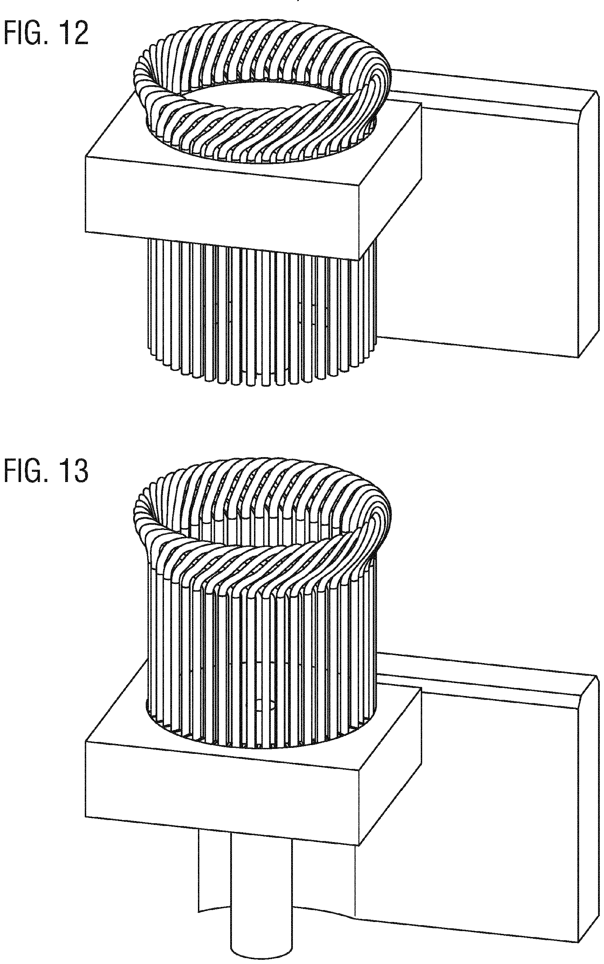

Die Anordnungseinheit 16 dient dem Überführen in die Soll-Anordnung (Fig. 12). Sind die Leiterstücke 18 bzw. Hairpins in der Soll-Anordnung, so können diese aus der Anordnungseinheit 16 entnommen (Fig. 13) und direkt in dieser Konfiguration in ein Statorpaket eingesetzt werden (siehe auch Figuren 10-13).

Die Anordnungseinheit 16 umfasst eine Aufnahmeeinheit 32. Die Aufnahmeeinheit 32 ist vorliegend (Figur 1 bis 6) als Zahnkranz ausgebildet, der um eine Drehachse 34 drehbar ausgebildet ist. Um die Aufnahmeeinheit 32 herum kann eine Führungsstruktur 36 angeordnet sein, die verhindert, dass Hairpins 18, wenn sie in der Aufnahmeeinheit 32 angeordnet sind, seitlich (in Radialrichtung) herausbewegt werden können. Es kann auch vorgesehen sein, dass die Anordnungseinheit 16 mit den darin angeordneten Leiterstücken 18 entnehmbar ist, um diese in das Statorpaket zu überführen, bzw. der in der Aufnahmeeinheit aus Leiterstücken geformte Korb wird nach der Fertigstellung aus der Anordnungseinheit soweit ausgeschoben, dass er aus der Anordnungseinheit entnommen werden kann. Die Anordnungseinheit wird dabei nicht bewegt.

Die Anordnungseinheit 16 ist ausgebildet, um die Leiterstücke durch eine Rotationsbewegung der Aufnahmeeinheit (Drehung um die Drehachse 34) gegenüber der Zuführeinheit 12 im Übernahmebereich 14 von der Zuführeinheit 12 zu übernehmen und dabei in eine Soll-Anordnung zu überführen.

In Figur 4 ist zu sehen, wie die ersten Leiterstücke 18 aus dem Eingriff mit dem umlaufenden Band 26 durch eine Kontaktierung durch die Aufnahmeeinheit 32 entnommen werden und in die Soll-Anordnung überführt werden.

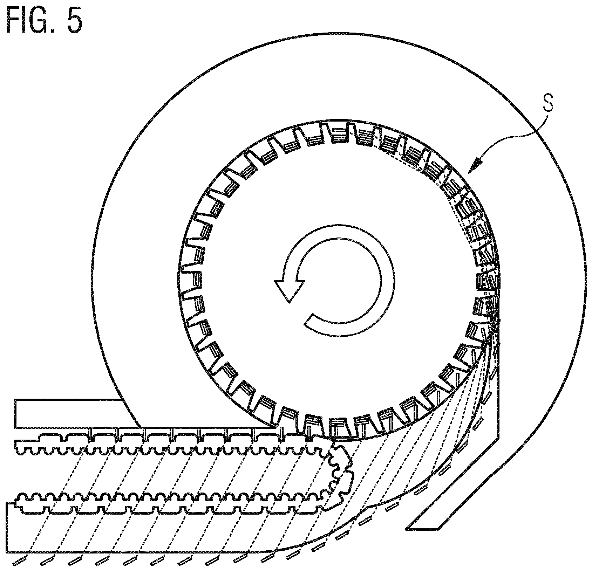

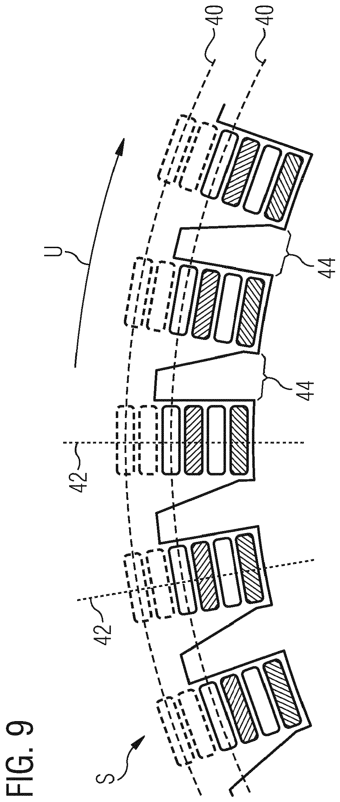

In Figur 5 befindet sich eine Vielzahl an Leiterstücke bereits in der Soll-Anordnung S. In der Soll-Anordnung S liegen die Leiterstücke 18 in einer Umfangsrichtung U verteilt auf mehreren konzentrisch zueinander angeordneten Kreisbahnen 40 oder auf Abschnitten von konzentrischen Kreisbahnen 40 angeordnet, so dass die Leiterstücke in radial ausgerichteten Reihen 42 angeordnet sind, die in Umfangsrichtung U über in radialer Richtung R verlaufende Radialspalte 44 zueinander beabstandet sind (siehe auch Figur 9).

Die Aufnahmeeinheit 32 ist im Beispiel von Figur 1 und 2 als rotierende Einheit in der Vorrichtung 10 bzw. in der Anordnungseinheit 16 ausgebildet. Denkbar ist jedoch auch, dass die Zuführeinheit 12 zur Erzeugung der Rotationsbewegung im Kreis um die Aufnahmeeinheit 32 herumbewegt wird. Es bietet jedoch konstruktive Vorteile die Zuführeinheit 12 ortsfest auf einer Vorrichtungsbasis 46 vorzusehen, und lediglich die Aufnahmeeinheit 32 innerhalb der Anordnungseinheit 16 rotierbar anzuordnen. In Figur 1 ist zur Erzeugung der Rotation der Aufnahmeeinheit 32 ein als Motor ausgebildeter Antrieb 60 und eine Manuelantriebseinheit 62 unterhalb der Vorrichtungsbasis 46 angeordnet. Antrieb 60 und Manuelantriebseinheit 62 können die Zuführeinheit 12 bzw. deren Fördereinheiten 24 und die Aufnahmeeinheit 32 synchronisiert zueinander bewegen. Ein jeweiliger einzelner Antrieb ist möglich. Die einzelnen Antriebe können miteinander synchronisiert sein.

Es kann ein Hubzylinder vorgesehen sein, der das in der Aufnahmeeinheit angeordnete Hairpinpaket nach oben schiebt, so dass die oberen Hairpinenden aus der Aufnahmeeinheit herausragen und von einem Greifer z.B. für das weitere Einfügen in einen Stator gegriffen werden können.

Die Aufnahmeeinheit 32 ist, wie oben bereits erwähnt, im vorliegenden Fall als Zahnkranz ausgebildet und weist eine kreisförmige Außenkontur 48 mit um den Umfang der Außenkontur 48 verteilt angeordneten hervorstehenden Vorsprüngen 50 auf. Die Vorsprünge 50 dienen als Anschläge und zeitgleich als Mitnehmer für die jeweiligen Leiterstücke 18, sodass diese in den Zwischenräumen 52 zwischen den Vorsprüngen aufgenommen und aus der Zuführeinheit 12 im Übernahmebereich 14 übernommen werden können. Die Vorsprünge 50 ragen dabei derart nah an die Führungsstruktur 36 heran, dass die Leiterstücke 18 nicht aus den Zwischenräumen 52 herausbewegt werden können. Durch die relative Rotationsbewegung zwischen Aufnahmeeinheit 32 und Zuführeinheit 12 wird ein rasches, schonendes und zuverlässiges Anordnen der Leiterstücke 18 gewährleistet (Figur 2). Andere Mechanismen zur Übernahme sind denkbar, bspw. mittels ansaugen über als Unterdruckdüsen ausgebildete Pneumatikdüsen oder Ähnliches.

Der Übernahmebereich 14 ist für eine Übernahme der Leiterstücke 18 aus der Zuführeinheit 12 in die Anordnungseinheit 16 ausgebildet. Im Übernahmebereich 14 erfolgt also sozusagen die Übergabe in die Anordnungseinheit 16. Der Übernahmebereich 14 kann als die Schnittstelle zwischen Zuführeinheit 12 bzw. Fördereinheit 24 und Anordnungseinheit 16 gesehen werden.

Wie in Figur 4 und 5 gut erkennbar, sind die Leiterstücke 18 in dem umlaufenden Band 24 derart gehalten, dass sie zwischen den Vorsprüngen 28 des Bandes 24 geringfügig überstehen. Die Vorsprünge 50 des Zahnkranzes bzw. der Aufnahmeeinheit 32 kontaktieren diese aus dem Band 24 herausragenden Abschnitte der Leiterstücke 18. In diesem Zustand sind die Leiterstücke 18 sowohl von dem umlaufenden Band 24 als auch durch den Zahnkranz 32 geführt. Gelangen die Leiterstücke 18 in den vorderen Bereich der Zuführeinheit 12, in der das umlaufende Band 24 seine Richtung wechselt, so geraten die Leiterstücke 18 aus dem Eingriff mit dem umlaufenden Band 24 hinaus und sind zwischen Zahnkranz 32 und Führungsstruktur 36 gehalten.

Im Beispiel von Figur 2 ist ersichtlich, dass die jeweiligen Schenkel 20 der Hairpin Leiterstücke 18 von unterschiedlichen Bändern 24a und 24b geführt werden. Der erste Schenkel 20a eines jeweiligen Hairpins 18 wird im Übernahmebereich 14 direkt in die Aufnahmeeinheit 32 überführt. Der jeweilige zweite Schenkel 20b wird in einen Führungskanal 54 eingeführt. Der erste Schenkel 20a eines jeweiligen Hairpins 18 wird entsprechend zuerst in die Aufnahmeeinheit 32 überführt und der zweite Schenkel 20b wird zeitlich nachgelagert ebenfalls in die Aufnahmeeinheit 32 überführt bzw. in Eingriff mit der Aufnahmeeinheit 32 gebracht. Dabei zieht der bereits im Eingriff mit der Aufnahmeeinheit 32 stehende erste Schenkel 20a den zweiten Schenkel 20b entlang des Führungskanals 54.

Der Führungskanal 54 ist zwischen einem inneren Führungselement 56 und einem äußeren Führungselement 58 gebildet. Das innere Führungselement 56 bildet gleichzeitig einen Teil der Führungsstruktur 36. Das innere Führungselement 56 ist im Bereich des Übernahmebereichs 14 ausgebildet, um die Leiterstücke 18 aus der Zuführeinheit 12 an die Aufnahmeeinheit 32 zu überführen. Im vorliegenden Beispiel bildet der Bereich, in dem die ersten Schenkel 20a der Hairpins 18 in die Aufnahmeeinheit 32 überführt werden, einen ersten Übergabeabschnitt 57a. Der Bereich, in dem die zweiten Schenkel 20b aus dem Führungskanal 54 in die Aufnahmeeinheit 32 übergeben werden, bildet einen zweiten Übergabeabschnitt 57b.

Entsprechend weist die Vorrichtung 10 im Beispiel von Fig.3 zwei Übernahmebereiche 14 auf, die jeweils wiederum einen ersten Übergabeabschnitt 57a und einen zweiten Übergabeabschnitt 57b umfassen.

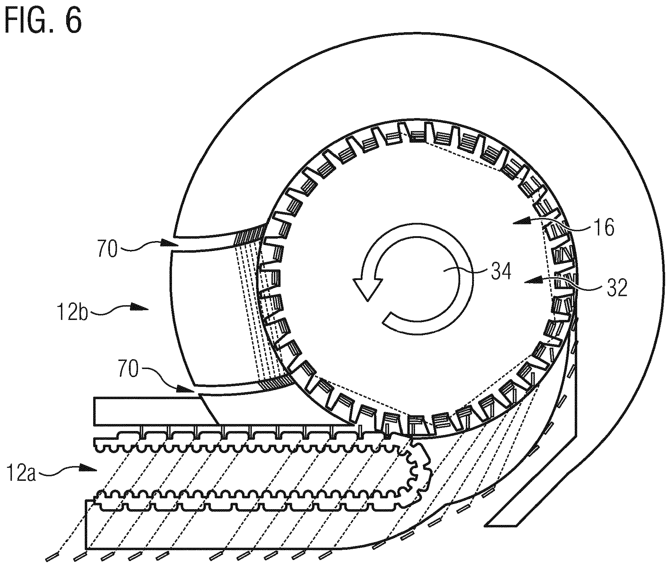

Figur 6 illustriert eine erfindungsgemäße Vorrichtung 10, die zwei verschiedenartige Zuführeinheiten 12a und 12b aufweist. Die erste Zuführeinheit 12a ist ähnlich der Zuführeinheiten 12 von Figur 1 oder 2 aufgebaut und umfasst ein umlaufendes Band 26 als Teil einer Fördereinrichtung 23. Die zweite Zuführeinheiten 12b umfasst zwei Kanäle 70 die jeweils ausgebildet sind, um freie Schenkel 20 von Hairpins oder einzelne Leiterstücke 18 in die Anordnungseinheit 16 bzw. deren Aufnahmeeinheit 32 zu überführen. Das Überführen beider Schenkel 20 erfolgt dabei zeitgleich. Die Hairpins 18 bzw. ihre freien Schenkel 20 können in Richtung der Aufnahmeeinheit 32 gespannt in den Kanälen 70 angeordnet sein. Ein Freigabemechanismus kann jeweils vorgesehen sein um eine Bewegung der Hairpins bzw. deren jeweiligen Übergang in die Aufnahmeeinheit 32 freizugeben und diese ansonsten zu fixieren.

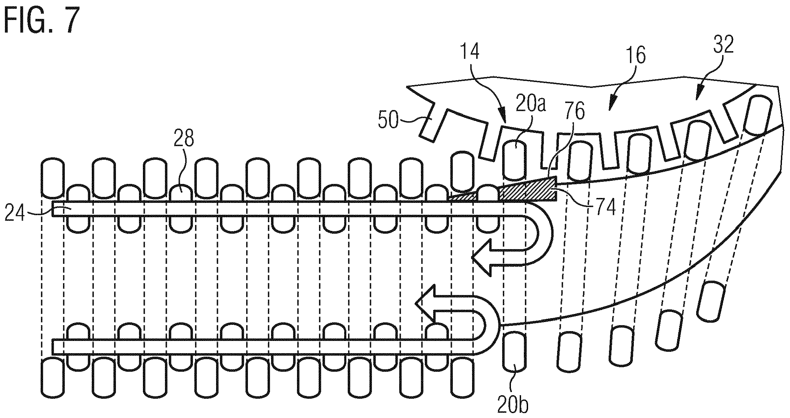

Figur 7 illustriert den Übernahmebereich 14 im Detail. Es kann im Übernahmebereich 14 eine Entkopplungseinheit 74 vorgesehen sein, die ausgebildet ist, um den freien Schenkel 20a aus dem Eingriff mit der Fördereinheit 24 heraus zu drängen. Hierzu weißt die Entkopplungseinheit 74 im vorliegenden Beispiel eine Kontaktfläche 76 auf, die angeordnet und ausgebildet ist, um eine der Fördereinheit 24 zugewandte Seite des Schenkels 20a zu kontaktieren und ihn von der Fördereinheit 24 weg und in Richtung der Aufnahmeeinheit 32 zu drängen. Die Entkopplungseinheit 74 ist in Form eines oberhalb der Fördereinheit 24 angeordneten Keilelements ausgebildet.

Figur 8 zeigt einen Leiterstückeinsetzabschnitt 30 der mit der Vorrichtung aus Figur 1 und 2 und anderen Vorrichtungen verwendbar ist. Der Leiterstückeinsetzabschnitt 30 aus Figur 8 ist ausgebildet, um Leiterstücke 18 verschiedener Weite, also mit unterschiedlichem Abstand zwischen den freien Schenkeln 20a und 20b bzw. mit unterschiedlich ausgebildeten Verbindungabschnitten 22 in die Zuführeinheit 12 einzubringen. Entsprechend weist die Zuführeinheit 12 mehrere Führungen für die unterschiedlich angeordneten zweiten freien Schenkel 20b der Hairpins 18 auf. Im Beispiel von Figur 8 ist der Leiterstückeinsetzabschnitt 30 zur Verwendung mit zwei unterschiedlichen Arten von Hairpins 18-1, 18-2 ausgebildet. Die Verwendung von weiteren Arten von Hairpins 18 ist denkbar. Es können 3, 4, 5 oder mehr Arten von unterschiedlichen Hairpins verwendet werden. Es können auch andere Leiterstücke verwendet werden. Bspw. können I-Pins verwendet werden.

## Patentansprüche

1. Vorrichtung (10) zum Anordnen von Leiterstücken (18) für Elektromotoren, insbesondere Hairpins, wobei die Vorrichtung (10) eine erste Zuführeinheit (12a) , einen Übernahmebereich (14) und eine Anordnungseinheit (16) umfasst; wobei
- die erste Zuführeinheit (12a) ausgebildet ist, um Leiterstücke (18) bereitzustellen;
- der Übernahmebereich (14) für eine Übernahme der Leiterstücke (18) aus der ersten Zuführeinheit (12a) in die Anordnungseinheit (16) ausgebildet ist;
- die Anordnungseinheit (16) eine Aufnahmeeinheit (32) umfasst und ausgebildet ist, um die Leiterstücke (18) durch eine Rotationsbewegung der Aufnahmeeinheit (32) gegenüber der ersten Zuführeinheit (12a) im Übernahmebereich (14) von der ersten Zuführeinheit (12a) zu übernehmen und dabei in eine Soll-Anordnung (S) zu überführen, wobei die Leiterstücke (18) in der Soll-Anordnung (S) in einer Umfangsrichtung (U) verteilt auf einer Kreisbahn (40) oder auf Abschnitten einer Kreisbahn (40) angeordnet sind, **dadurch gekennzeichnet, dass** die Vorrichtung (10) eine zweite Zuführeinheit (12b) aufweist, die verschieden zu der ersten Zuführeinheit (12a) ausgebildet ist, und die zwei Kanäle (70) umfasst, die jeweils ausgebildet sind, um einzelne Leiterstücke (18), insbesondere freie Schenkel (20) von Hairpins, in die Aufnahmeeinheit (32) der Anordnungseinheit (16) zu überführen

2. Vorrichtung nach Anspruch 1, wobei die Aufnahmeeinheit (32) rotierbar in der Anordnungseinheit (16) angeordnet ist, insbesondere und als, insbesondere abnehmbarer, Zahnkranz ausgebildet ist.

3. Vorrichtung nach einem der vorigen Ansprüche, wobei die Aufnahmeeinheit (32) eine kreisförmige Außenkontur mit um den Umfang der Außenkontur verteilt angeordneten hervorstehenden Vorsprüngen (50) aufweist.

4. Vorrichtung nach einem der vorigen Ansprüche, wobei die erste Zuführeinheit (12a) eine Fördereinrichtung (23) umfasst, die ausgebildet ist, um Leiterstücke (18) in den Übernahmebereich (14) zu bewegen.

5. Vorrichtung nach einem der vorigen Ansprüche, wobei die erste Zuführeinheit (12a) eine Fördereinrichtung (23) umfasst, die zwei Fördereinheiten (24) umfasst, die derart ausgebildet und in der ersten Zuführeinheit (12a) angeordnet sind, dass sie jeweils ausgebildet sind, um einen Schenkel (20) eines hairpinförmigen Leiterstücks (18) in den Übernahmebereich (14) zu fördern.

6. Vorrichtung nach einem der vorigen Ansprüche, wobei die erste Zuführeinheit (12a) eine Fördereinheit (24) umfasst, die wiederum ein umlaufendes Band (26) umfasst, insbesondere wobei das Band (26) mit hervorstehenden Vorsprüngen (28) ausgebildet ist, wobei die Vorsprünge (28) als Anlageabschnitte für Leiterstücke (18) ausgebildet sind.

7. Vorrichtung nach einem der vorigen Ansprüche, wobei der Übernahmebereich (14) einen ersten Übergabeabschnitt (57a) und einen zweiten Übergabeabschnitt (57b) aufweist, wobei der erste Übergabeabschnitt (57a), für die Übernahme eines ersten Schenkels (20a) eines hairpinförmigen Leiterstücks (18) in die Anordnungseinheit (32) ausgebildet ist, und der zweite Übergabeabschnitt (57b) für die Übernahme eines zweiten Schenkels (20b) desselben hairpinförmigen Leiterstücks (18) in die Anordnungseinheit (32) ausgebildet ist.

8. Verfahren zur Anordnung von Leiterstücken für Elektromotoren, insbesondere Hairpins, in einer Soll-Anordnung (S) in einer Anordnungseinheit (32) wobei die Leiterstücke (18) in der Soll-Anordnung (S) in einer Umfangsrichtung (U) verteilt auf einer Kreisbahn (40) oder auf Abschnitten einer Kreisbahn (40) angeordnet sind, wobei das Verfahren umfasst:
- Bewegen der Leiterstücke (18) der Reihe nach in einen Übernahmebereich (14) mittels einer ersten Zuführeinheit (12a) ;
- Übernehmen der Leiterstücke (18) aus der ersten Zuführeinheit (12a) in eine Aufnahmeeinheit (32) einer Anordnungseinheit (16) durch eine Rotationsbewegung zwischen der Aufnahmeeinheit (32) und der ersten Zuführeinheit (12a) , wobei die Leiterstücke (18) durch die Rotationsbewegung ebenso in die Soll-Anordnung (S) überführt werden
- Überführen einzelner Leiterstücke (18), insbesondere freier Schenkel (20) von Hairpins, in die Aufnahmeeinheit (32) der Anordnungseinheit (16) mittels zwei Kanäle (70) einer zweiten Zuführeinheit (12b), wobei die zweite Zuführeinheit (12b) verschieden zu der ersten Zuführeinheit (12a) ausgebildet ist

9. Verfahren nach dem vorigen Verfahrensanspruch, wobei wenigstens ein Teil der Leiterstücke (18) Hairpins sind und bei der Übernahme der Hairpins zunächst ein erster Schenkel (20a) in die Anordnungseinheit (16) in seine in der Soll-Anordnung (S) vorgesehenen Position übernommen wird und zeitlich nachfolgend ein zweiter Schenkel (20b) desselben Hairpins (18).

## Claims

1. Device (10) for arranging conductor pieces (18) for electric motors, in particular hairpins, wherein the device (10) comprises a first feeding unit (12a), a transfer area (14) and an arranging unit (16); wherein
- the first feeding unit (12a) is configured for providing conductor pieces (18);
- the transfer area (14) is configured for transferring the conductor pieces (18) from the first feeding unit (12a) into the arranging unit (16);
- the arranging unit (16) comprises a receiving unit (32) and is configured for taking over the conductor pieces (18) from the first feeding unit (12a) by rotational movement of the receiving unit (32) with respect to the first feeding unit (12a) in the transfer area (14) while transferring them into a target arrangement (S), wherein the conductor pieces (18) are arranged in the target arrangement (S) distributed in a circumferential direction (U) on a circular path (40) or on sections of a circular path (40),
**characterized in that** the device (10) comprises a second feeding unit (12b) which is configured in a different manner than the first feeding unit (12a) and which comprises two channels (70) which are configured for transferring single conductor pieces (18), in particular free legs (20) of hairpins into the receiving unit (32) of the arranging unit (16) .

2. Device as claimed in claim 1, wherein the receiving unit (32) is arranged rotatably in the arranging unit (16) and is configured as a geared ring which is in particular detachable.

3. Device as claimed in one of the previous claims, wherein the receiving unit (32) comprises a circular outer contour with protruding projections (50) distributed over the circumference of the outer contour.

4. Device as claimed in one of the previous claims, wherein the first feeding unit (12a) comprises a conveyor device (23) which is configured for moving conductor pieces (18) into the transfer area (14).

5. Device as claimed in one of the previous claims, wherein the first feeding unit (12a) comprises a conveyor device (23) which comprises two conveyor devices (24), which are arranged in the first feeding unit (12a) and are configured such that each is configured for conveying a leg (20) of a hairpin-shaped conductor piece (18) into the transfer area (14).

6. Device as claimed in one of the previous claims, wherein the first feeding unit (12a) comprises a conveyor unit (24) which comprises a revolving belt (26), wherein in particular the belt (26) is configured with protruding projections (28), wherein the projections (28) are configured as attachment sections for conductor pieces (18).

7. Device as claimed in one of the previous claims, wherein the transfer area (14) comprises a first handover section (57a) and a second handover section (57b), wherein the first handover section (57a) is configured for transferring a first leg (20a) of a hairpin-shaped conductor piece (18) into the arranging unit (32) and the second handover section (57b) is configured for transferring a second leg (20b) of the same hairpin-shaped conductor piece (18) into the arranging unit (32) .

8. Method for arranging conductor pieces for electric motors, in particular hairpins, in a target arrangement (S) in an arranging unit (32), wherein the conductor pieces (18) are arranged in the target arrangement (S) distributed in a circumferential direction (U) on a circular path (40) or on sections of a circular path (40), the method comprising:
- moving the conductor pieces (18) one after another into a transfer area (14) by means of a first feeding unit (12a);
- transferring the conductor pieces (18) from the first feeding unit (12a) into a receiving unit (32) of an arranging unit (16) by a rotational movement between the receiving unit (32) and the first feeding unit (12a), wherein the conductor pieces (18) are transferred by the rotational movement also into a target arrangement (S),
- transferring single conductor pieces (18), in particular free legs (20) of hairpins, into the receiving unit (32) of the arranging unit (16) by means of two channels (70) of a second feeding unit (12b), wherein the second feeding unit (12b) is configured differently from the first feeding unit (12a).

9. Method as claimed in the previous method claim, wherein at least a part of the conductor pieces (18) are hairpins and, during the transfer of the hairpins, at first a first leg (20a) is transferred into the arranging unit (16) in its position provided in the target arrangement (S), and, at a later time, a second leg (20) of the same hairpin (18).

## Revendications

1. Dispositif (10) pour disposer des pièces conductrices (18) pour des moteurs électriques, en particulier des épingles à cheveux, dans lequel le dispositif (10) comprend une première unité d'alimentation (12a), une zone de prise en charge (14) et une unité de disposition (16) ; dans lequel
- la première unité d'alimentation (12a) est réalisée pour fournir des pièces conductrices (18) ;
- la zone de prise en charge (14) est réalisée pour une prise en charge des pièces conductrices (18) à partir de la première unité d'alimentation (12a) dans l'unité de disposition (16) ;
- l'unité de disposition (16) comprend une unité de réception (32) et est réalisée pour prendre en charge les pièces conductrices (18) par un mouvement de rotation de l'unité de réception (32) par rapport à la première unité d'alimentation (12a) dans la zone de prise en charge (14) à partir de la première unité d'alimentation (12a) et ce faisant pour les amener dans une disposition théorique (S), dans lequel les pièces conductrices (18) dans la disposition théorique (S) sont disposées dans une direction périphérique (U) de manière répartie sur une trajectoire circulaire (40) ou sur des parties d'une trajectoire circulaire (40), **caractérisé en ce que** le dispositif (10) présente une deuxième unité d'alimentation (12b), qui est réalisée de manière différente de la première unité d'alimentation (12a), et qui comprend deux canaux (70), qui sont réalisés respectivement afin d'amener des pièces conductrices (18) individuelles, en particulier les branches libres (20) d'épingles à cheveux, dans l'unité de réception (32) de l'unité de disposition (16).

2. Dispositif selon la revendication 1, dans lequel l'unité de réception (32) est disposée de manière à pouvoir tourner dans l'unité de disposition (16), en particulier et est réalisée sous la forme d'une couronne dentée, en particulier amovible.

3. Dispositif selon l'une quelconque des revendications précédentes, dans lequel l'unité de réception (32) présente un contour extérieur circulaire avec des parties saillantes en saillie (50) disposées de manière répartie autour de la périphérie du contour extérieur.

4. Dispositif selon l'une quelconque des revendications précédentes, dans lequel la première unité d'alimentation (12a) comprend un système de transport (23), qui est réalisé pour déplacer les pièces conductrices (18) dans la zone de prise en charge (14).

5. Dispositif selon l'une quelconque des revendications précédentes, dans lequel la première unité d'alimentation (12a) comprend un système de transport (23), qui comprend deux unités de transport (24), qui sont réalisées et disposées dans la première unité d'alimentation (12a) de telle sorte qu'elles sont réalisées respectivement pour transporter une branche (20) d'une pièce conductrice (18) en forme d'épingle à cheveux dans la zone de prise en charge (14).

6. Dispositif selon l'une quelconque des revendications précédentes, dans lequel la première unité d'alimentation (12a) comprend une unité de transport (24), qui comprend à nouveau une bande (26) périphérique, en particulier dans lequel la bande (26) est réalisée avec des parties saillantes (28) en saillie, dans lequel les parties saillantes (28) sont réalisées sous la forme de parties d'appui pour les pièces conductrices (18).

7. Dispositif selon l'une quelconque des revendications précédentes, dans lequel la zone de prise en charge (14) présente une première partie de remise (57a) et une deuxième partie de remise (57b), dans lequel la première partie de remise (57a) est réalisée pour la prise en charge d'une première branche (20a) d'une pièce conductrice (18) en forme d'épingle à cheveux dans l'unité de disposition (32), et la deuxième partie de remise (57b) est réalisée pour la prise en charge d'une deuxième branche (20b) de la même pièce conductrice (18) en forme d'épingle à cheveux dans l'unité de disposition (32).

8. Procédé pour la disposition de pièces conductrices pour des moteurs électriques, en particulier des épingles à cheveux, dans une disposition théorique (S) dans une unité de disposition (32), dans lequel les pièces conductrices (18) dans la disposition théorique (S) sont disposées dans une direction périphérique (U) de manière répartie sur une trajectoire circulaire (40) ou sur des parties d'une trajectoire circulaire (40), dans lequel le procédé comprend :
- le déplacement des pièces conductrices (18) à tour de rôle dans une zone de prise en charge (14) au moyen d'une première unité d'alimentation (12a) ;
- la prise en charge des pièces conductrices (18) à partir de la première unité d'alimentation (12a) dans une unité de réception (32) d'une unité de disposition (16) par un mouvement de rotation entre l'unité de réception (32) et la première unité d'alimentation (12a), dans lequel les pièces conductrices (18) sont pareillement amenées par le mouvement de rotation dans la disposition théorique (S),
- l'amenée de pièces conductrices (18) individuelles, en particulier de branches libres (20) d'épingles à cheveux, dans l'unité de réception (32) de l'unité de disposition (16) au moyen de deux canaux (70) d'une deuxième unité d'alimentation (12b), dans lequel la deuxième unité d'alimentation (12b) est réalisée de manière différente de la première unité d'alimentation (12a).

9. Procédé selon la revendication précédente, dans lequel au moins une partie des pièces conductrices (18) sont des épingles à cheveux et lors de la prise en charge des épingles à cheveux tout d'abord une première branche (20a) dans l'unité de disposition (16) est prise en charge dans sa position prévue dans la disposition théorique (S) et consécutivement une deuxième branche (20b) de la même épingle à cheveux (18).
